Europäisches Patentamt

European Patent Office

Office européen des brevets

(19)

(11) Publication number : **0 454 114 B1**

(12) **EUROPEAN PATENT SPECIFICATION**

(45) Date of publication of patent specification :
27.07.94 Bulletin 94/30

(51) Int. Cl.⁵ : **B23B 27/14, C04B 41/50**

(21) Application number : **91106680.1**

(22) Date of filing : **25.04.91**

(54) **Drill of diamond-coated sintered body.**

(30) Priority : **27.04.90 JP 114747/90**
**27.04.90 JP 114748/90**
**05.10.90 JP 269214/90**

(43) Date of publication of application :
**30.10.91 Bulletin 91/44**

(45) Publication of the grant of the patent :
**27.07.94 Bulletin 94/30**

(84) Designated Contracting States :
**DE FR GB IT**

(56) References cited :
EP-A- 0 008 972
EP-A- 0 113 660
EP-A- 0 231 130
CHEMICAL ABSTRACTS, vol. 103, no. 26, De-
cember 1985, page 287, abstract no.219824a,
Columbus, Ohio, US; & JP-A-60 122 785 (MIT-
SUBISHI METAL CORP.) 01-07-1985
IDEM

(73) Proprietor : **SUMITOMO ELECTRIC**
**INDUSTRIES, LTD.**
**5-33, Kitahama 4-chome,**
**Chuo-ku**
**Osaka-shi, Osaka 541 (JP)**

(72) Inventor : **Omori, Naoya**
**c/o Itami Works of Sumitomo Electric Ind. Ltd.**
**1-1, Koyakita 1-chome, Itami-shi, Hyogo (JP)**
Inventor : **Moriguchi, Hideki**
**c/o Itami Works of Sumitomo Electric Ind. Ltd.**
**1-1, Koyakita 1-chome, Itami-shi, Hyogo (JP)**
Inventor : **Nomura, Toshio**
**c/o Itami Works of Sumitomo Electric Ind. Ltd.**
**1-1, Koyakita 1-chome, Itami-shi, Hyogo (JP)**

(74) Representative : **Herrmann-Trentepohl,**
**Werner, Dipl.-Ing. et al**
**Patentanwälte Herrmann-Trentepohl,**
**Kirschner, Grosse, Bockhorni & Partner**
**Forstenrieder Allee 59**
**D-81476 München (DE)**

## Description

The present invention relates to the structure of a drill which is mainly used for drilling a light alloy such as an Al-Si alloy, a fiber reinforced light alloy, a nonmetal such as plastic, FRP (fiber reinforced plastic) or graphite, a printed circuit board or the like, and more particularly, it relates to the structure of a high-quality drill of a diamond-coated sintered body, which is excellent in wear resistance and toughness.

Description of the Background Art

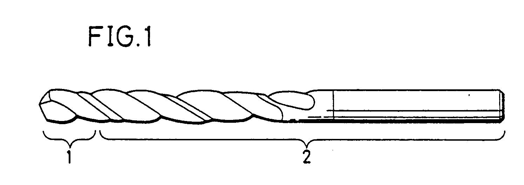

A drill is one of cutting tools for drilling steel products and the like. Fig. 1 shows an exemplary structure of a twist drill. The twist drill is formed by a cutting portion 1 which is applied to drilling, and a shank 2 which is not concerned in cutting but mainly adapted to discharge chips and is mounted on a chuck etc. of a cutting machine such as a drilling machine.

In general, materials for drills are prepared from high-speed steel and cemented carbide. The high-speed steel, which is excellent in toughness but inferior in wear resistance, is improper for high-speed cutting. On the other hand, cemented carbide, which is excellent in wear resistance and tool accuracy characteristics but brittle, may cause breakage when the same is applied to a machine tool having low rigidity, for example.

In order to improve such materials, there have been proposed a structure attained by coating a cutting portion of high-speed steel with hard TiN, a structure attained by brazing a cutting portion of cemented carbide, and the like.

In recent years, there have further been proposed a structure attained by brazing different cemented carbide materials (P30 and D30) for improving wear resistance and toughness as disclosed in Japanese Utility Model Laying-Open No. 58-143115 (1983) or metallurgically integrating/connecting such different materials as disclosed in Japanese Utility Model Publication No. 62-46489 (1987), a drill of a double structure whose central and outer peripheral portions are made of different cemented carbide materials in consideration of difference between characteristics required for such portions as disclosed in Japanese Patent Laying-Open No. 62-218010 (1987), or a method of attaining such a double structure by injection molding as disclosed in Japanese Patent Laying-Open No. 63-38501 or 38502 (1988), and the like. There has also been proposed a structure attained by preparing a material for a drill from cermet Ti-base cemented carbide in order to improve adhesion resistance, as disclosed in Japanese Patent Laying-Open No. 62-292307 (1987).

On the other hand, diamond, which has a number of excellent characteristics such as extremely high hardness, chemical stability and high thermal conductivity, has been widely applied to a hard material itself, or to a hard material coated with diamond or diamond-structure carbon. Examples of conventional diamond tools are cutting tools such as a throw-away tip, a drill, a microdrill and an end mill for working various light metals and alloys thereof or plastic materials, and various wear resistant tools such as a bonding tool employed for a step of packaging a chip-type component.

Among methods of preparing artificial diamond which is applied to manufacturing of such tools, a number of methods such as $\alpha$ wave plasma CVD, RF-plasma CVD, EA-CVD, magnetic field $\alpha$ wave plasma CVD, RF heat plasma CVD, DC plasma CVD, DC plasma jet CVD, filament heat CVD, a combustion method and the like are known in relation to formation of diamond coating layers from vapor phases. These are prevailing methods of preparing diamond-coated hard materials.

As to a base material for a diamond-coated hard material having high adhesion strength, there has already been proposed a method of selecting a material which is identical in thermal expansion coefficient to diamond. Japanese Patent Laying-Open No. 61-291493 (1986) proposes employment of a sintered body which is mainly composed of $Si_3N_4$ or SiC as a base material.

In general, an Al-Si alloy or a printed circuit board has been perforated by a WC-based cemented carbide drill, or a drill of surface-coated WC-based cemented carbide which is prepared by coating the surface of such a WC-based cemented carbide drill with a single or multiple hard coating layer of a carbide, a nitride and/or a carbonitride of Ti, Zr or the like in a thickness of 0.2 to 20 $\mu$m by chemical vapor deposition such as ordinary CVD or physical vapor deposition such as ion plating or sputtering. In particular, a printed circuit board has been perforated by the so-called microdrill, which is formed of a material similar to the above in a relatively small diameter.

In recent years, however, labor reduction and speed increase are required for perforation of an Al-Si alloy and a printed circuit board, with strict drilling conditions. Under such severe conditions, the life of the aforementioned WC-based cemented carbide drill is ended in an extremely short time when the same is used for perforating an Al-Si alloy or a printed circuit board, due to significant wear. Also in the drill of surface-coated WC-based cemented carbide, it is impossible to attain desired cutting performance since its hard coating layer may be significantly worn in a short time to cause separation or chipping, or a workpiece may be deposited.

Although an attempt has been made to coat the surface of a WC-based cemented carbide drill with a diamond coating layer by a well-known low-pressure vapor phase synthesizing method, such a technique has not yet been put into practice for the following reasons:

(1) Graphite having low wear resistance is apt to precipitate on the surface of Co contained in the cemented carbide. If the Co content is reduced in order to prevent this, toughness of the cemented carbide is lowered to easily cause chipping during cutting.

(2) Since linear expansion coefficients of diamond and the cemented carbide are extremely different from each other, adhesion strength of the diamond coating layer is reduced due to residual stress, such that the coating layer is separated for itself when its thickness exceeds 20 μm, while such separation is easily caused in cutting even if the coating layer has a small thickness.

On the other hand, materials for a printed circuit board have been so varied that there has been developed an extremely hard material, which is mainly composed of ceramic resin etc., having Vickers hardness exceeding 100.

To this end, the aforementioned microdrill of WC-based cemented carbide (Vickers hardness: about 1500) or surface-coated WC-based cemented carbide (Vickers hardness: about 2000 to 2500) is so insufficient in hardness that it is impossible to attain high wear resistance. Further, since such a microdrill has an elongated configuration with a small diameter of not more than 5 mm, or not more than 3 mm in general, chipping may be caused in a short time or the hard coating layer may be separated or significantly worn if the drill is used under severe conditions. In addition, the material, such as ceramic resin, for the printed circuit board is easily deposited onto the tip of a cutting portion. Thus, the conventional microdrill cannot satisfy necessary cutting performance.

In the case of a drill having a cutting portion and a shank which are integrated with or inseparably connected with/fixed to each other, the following problems are caused:

A cutting portion and a shank of a drill are used under different loaded conditions. Therefore, different characteristics are required for the respective parts of such a drill. For example, wear resistance and adhesion resistance are required for a tip of the cutting portion, while toughness for maintaining strength of the tool is required for the shank. As to the tip of the cutting portion, further, different characteristics are required for central and outer peripheral portions thereof, since these portions are driven at different cutting speeds.

When a drill whose cutting portion is coated in order to satisfy such complicated requirements for the characteristics is resharpened for general use, the coating layer is inevitably separated at least from a front flank side, and hence most of the coating effect is lost.

On the other hand, a drill which is formed by brazing cemented carbide to its cutting portion is not applicable to deep hole drilling of an uncuttable material. If the shank is made of steel, further, significant difference is caused in thermal expansion coefficient between the same and the cemented carbide forming the cutting portion, to easily cause splitting or cracking in brazing.

In recent years, a cemented carbide material for the shank of a drill has been brought into a coarse grain or high binder phase state, in order to improve toughness of the shank. In this case, however, strength of the material is reduced or distortion of an elastic limit is reduced, and hence the shank is undesirably broken during perforating, due to vibration of a workpiece, instable rotation of a cutting machine, or the like.

On the other hand, a drill of diamond-coated cemented carbide is separated in an initial stage due to insufficient adhesion strength of its diamond-coated layer, and hence it is impossible to improve wear resistance.

When a twist drill having a base material of a silicon nitride based ceramic sintered body is coated with diamond, the possibility of separation of the diamond coating layer is greatly reduced. However, such a twist drill is broken under severe cutting conditions, due to insufficient strength of the sintered body. This also applies to a diamond-coated drill having a base material of ceramic such as alumina or SiC.

While a drill formed by inseparably and integrally connecting the aforementioned cutting portion and shank can be continuously used by resharpening the cutting portion every prescribed operating time, the frequency of such resharpening is restricted, and the cost is increased. Further, sharpness and the tool life are dispersed depending on conditions of the resharpening operation. In addition, it is necessary to successively correctly comprehend the length of the drill in response to numerical control and automation of a cutting machine to which the drill is applied. Thus, the length of the drill must be measured through complicated operation every time the same is resharpened.

Japanese Patent Laying-Open No. 122,786/1985 discloses a 0.1 to 20 μm thick diamond coating on a surface of the base material containing no less than 60 vol.% Silicium-carbide/nitride to increase diamond nucleation densitiy at an initial stage of diamond coating, in order to obtain a high quality diamond film.

US-patent No. 4,744,704 discloses a throw-away tipped drill comprising a drill body and a drill tip which is detachably secured in a slot in the drill body. The disclosure addresses to the shape and the inclination of the contact surfaces between the tip body and the drill body. The cutting inserts consist of a hard metal such as cemented carbide.

SUMMARY OF THE INVENTION

A first object of the present invention is to provide a drill which is excellent in wear resistance, toughness and deposition resistance with respect to a workpiece.

A second object of the present invention is to provide a drill showing excellent wear resistance and deposition resistance in drilling of an Al-Si alloy or a printed circuit board under severe conditions, which can attain a longer tool life than a conventional drill.

A third object of the present invention is to provide a microdrill of a diamond-coated $Si_3N_4$ sintered body showing excellent wear resistance, deposition resistance and toughness in drilling of a printed circuit board, which can attain a longer tool life than a conventional drill.

A fourth object of the present invention is to provide a throw-away tipped drill comprising an insert which is excellent in wear resistance as well as deposition resistance and a shank which has sufficient toughness against breakage, with no resharpening for continuous use.

The inventive drill of a diamond-coated sintered body for attaining the aforementioned first object comprises a base material of a sintered body mainly composed of silicon nitride and/or carbon nitride and diamond coating layer of at least 0.1 μm in thickness which is formed on at least a portion, being worn upon working, of the surface of the base material.

According to this structure, the drill has excellent toughness due to the tough base material. Since the base material has a linear expansion coefficient which is substantially equal to that of diamond, the diamond coating layer is hardly separated. Further, the drill is improved in wear resistance due to high hardness of diamond, while its deposition resistance is improved due to high thermal conductivity.

The inventive drill of a diamond-coated sintered body for attaining the aforementioned second object has a substrate of an $Si_3N_4$ sintered body being mainly composed of $Si_3N_4$ and containing 0.01 to 30 percent by weight each of at least one of MgO, $Y_2O_3$, $Al_2O_3$, AlN, $ZrO_2$, $HfO_2$, TiC, TiN, $B_4C$, BN and $TiB_2$ to be not more than 50 percent by weight in total. A diamond coating layer of at least 0.1 μm in thickness is formed on the surface of the substrate.

In the inventive drill of a diamond-coated $Si_3N_4$ sintered body, the substrate of the $Si_3N_4$ sintered body is superior in hardness to cemented carbide, excellent in wear resistance, and substantially identical in linear expansion coefficient to diamond. Therefore, no residual stress is caused in the diamond coating layer, which can attain excellent adhesion with respect to the substrate even if its thickness exceeds 20 μm. Further, the diamond coating layer is excellent in wear resistance, as well as deposition resistance with respect to a workpiece such as an Al-Si alloy or a printed circuit board.

If the thickness of the diamond coating layer is less than 0.1 μm, it is impossible to attain the effects of wear resistance and deposition resistance by diamond coating. However, it is unnecessary and uneconomic to provide a diamond coating layer having a thickness exceeding 200 μm.

While it is known that $Si_3N_4$ is inferior in degree of sintering since the same is a covalent material, it is possible to obtain a sufficiently dense and hard $Si_3N_4$ sintered body as a substrate for a drill for perforating an Al-Si alloy or a printed circuit board by sintering the material with addition of at least one of MgO, $Y_2O_3$, $Al_2O_3$ and AlN. Further, it has been recognized that such an $Si_3N_4$ sintered body is improved in strength at elevated temperature with addition of $ZrO_2$ and/or $HfO_2$, while the same is improved in wear resistance with addition of TiC, TiN, $B_4C$, BN and/or $TiB_2$.

The additional amount of each such sintering assistant is in a range of 0.01 to 30 percent by weight. The additional amount is restricted in this range since no additional effect is attained if the amount is less than 0.01 percent by weight, while wear resistance is reduced in relation to MgO, $Y_2O_3$, $Al_2O_3$ and AlN and toughness is reduced in relation to $ZrO_2$, $HfO_2$, TiC, TiN, $B_4C$, BN and $TiB_2$ if the amount exceeds 30 percent by weight. If the total additional amount of these sintering assistants exceeds 50 percent by weight, further, strength of the $Si_{2N}3$ sintered body is reduced.

A method of producing such an $Si_3N_4$ sintered body is similar to an ordinary one except for the sintering assistant(s) and the additional amount(s) thereof. For example, a pressed body of $Si_3N_4$ powder mixed with sintering assistant(s) is sintered in a non-oxidizing atmosphere at 1650 to 1900°C.

The inventive microdrill of a diamond-coated sintered body for attaining the aforementioned third object comprises a substrate of an $Si_3N_4$ sintered body which is mainly composed of columnar crystals of $Si_3N_4$ having breadths of not more than 1 μm and contains 0.01 to 30 percent by weight each of at least one of MgO, $Y_2O_3$, $Al_2O_3$, AlN, $ZrO_2$, TiC, TiN, $B_4C$, BN and $TiB_3$, and a diamond coating layer of at least 0.1 μm in thickness provided on the surface of the substrate.

In this microdrill of a diamond-coated sintered body, the substrate is prepared from an $Si_3N_4$ sintered body

and the thickness of the diamond coating layer is restricted to be at least 0.1 µm, for reasons similar to the above. Further, it is unnecessary and uneconomic to provide a diamond coating layer having a thickness exceeding 200 µm also similarly to the above, and the thickness of the diamond coating layer is preferably not more than 100 µm, particularly in the case of a microdrill for perforating a printed circuit board. In addition, an effect of the additional sintering assistant(s) and the reason for restriction of the additional amount(s) thereof are also similar to the above.

The inventive microdrill of a diamond-coated sintered body is different from the aforementioned drill of a diamond-coated sintered body in a point that $Si_3N_4$ defining the main component of the sintered body has a columnar crystal structure of not more than 1 µm in breadth. It has been recognized that, when mixed powder of $Si_3N_4$ powder and the sintering assistant(s) is sintered in a gaseous nitrogen atmosphere of at least 3 atm. at a sintering temperature of not more than 1850°C for a sintering time of not more than 3 hours, the as-formed $Si_3N_4$ sintered body has a columnar crystal structure of not more than 1 µm in breadth and is greatly improved in toughness. Even if the microdrill has a small diameter of not more than 5 mm to be applied to perforation of a printed circuit board, in particular, sufficient toughness is attained to implement an extremely long life. When $Si_3N_4$ powder obtained by an imide decomposition method is employed as a raw material, crystal grains are refined to further improve toughness.

The inventive drill of a diamond-coated sintered body for attaining the aforementioned fourth object is in the form of a throw-away tipped drill which comprises an insert for cutting a workpiece and a shank to be mounted on a prescribed position of a cutting machine, and the insert is disengageably mechanically connected with the shank. The insert is formed by a diamond-coated sintered body having a substrate of a sintered body which is mainly composed of $Si_3N_4$ and/or SiC. In the surface of the substrate, at least the cutting edge of the insert is coated with diamond. The shank is preferably made of steel.

It has been recognized that a diamond coating layer shows extremely high adhesion strength when at least a part of the surface of silicon nitride based ceramic is case-sintered so that at least the case-sintered portion is coated with diamond. A similar effect is attained also when freely grown columnar crystals of silicon nitride are present in at least a part of the interface between the base material and the coating layer. It is conceivable that the surface of the base material is irregularized when the same is case-sintered or provided with columnar crystals, whereby the contact area between the base material and the diamond coating layer is increased to improve adhesion strength. In order to implement such a state (case sintered), mixed powder may be formed and sintered so that the as-formed sintered body is provided with a diamond coating layer on its surface. Alternatively a sintered body may be brought into target configuration and dimensions by grinding etc. and again heat treated so that the same is provided with columnar crystals of silicon nitride on its surface. In more concrete terms, it is preferable to sinter the powder in a temperature range of 1600 to 2000°C in an $N_2$ gas atmosphere of 1 to 3000 atm. for 30 minutes to 5 hours. After such working, it is preferable to perform heat treatment in a temperature range of 1300 to 2000°C in an $N_2$ gas and/or inert gas atmosphere of 1 to 3000 atm. In response to requirement for dimensional accuracy, the overall surface may be case-sintered and the base material of the sintered body may be partially ground.

A diamond coating layer for a heat treated surface exhibited high adhesion strength similarly to that for a sintered surface. This is because freely grown columnar crystals of silicon nitride are present in both cases.

The diamond coating layer for the insert is preferably at least 0.1 µm and not more than 200 µm in thickness.

An effect similar to the above can be attained also when the coating layer is formed of diamond-structure carbon in place of diamond, the coating layer contains another element such as boron or nitrogen, or the coating layer is in the form of a multiple layer. A good effect is also expected as to a coating layer containing boron nitride. Such an effect remains unchanged even if some heat treatment is performed after the coating layer is provided. A similar effect can be attained also when at least one surface coating layer of a carbide, a nitride or a carbo-nitride of titanium or $Al_2O_3$ is provided on the coating layer. The surface layer is preferably flattened with a diamond grindstone or the like.

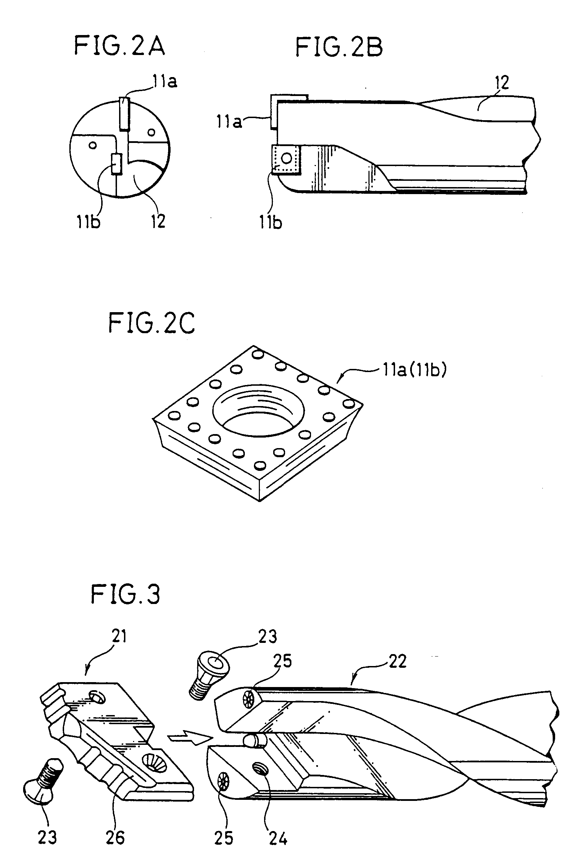

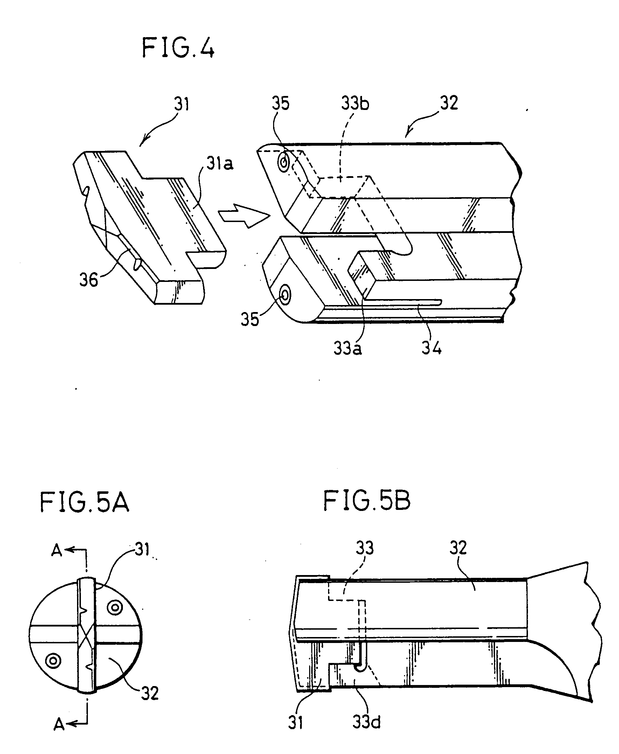

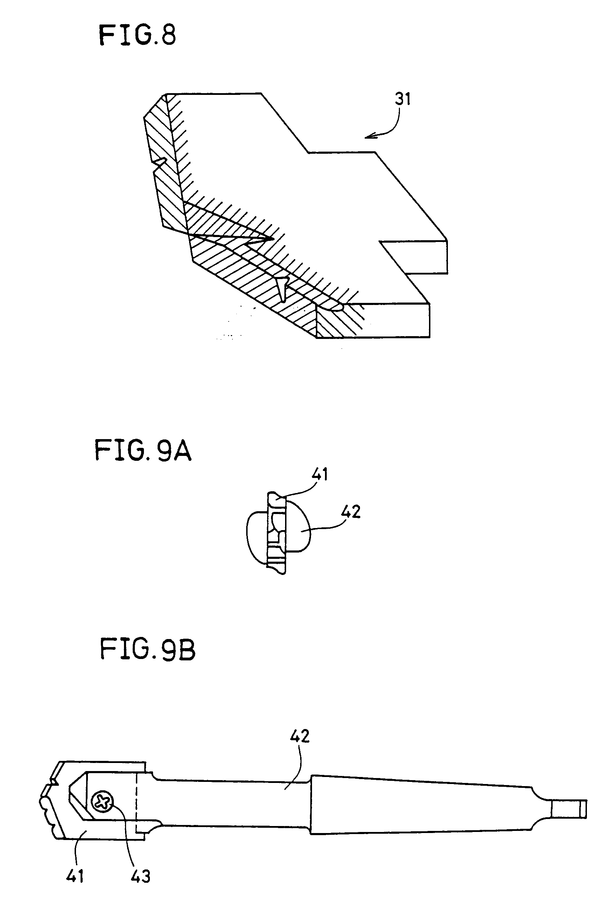

An insert and a shank of the inventive throw-away tipped drill are connected with each other mainly in three systems shown in Figs. 2A to 2C, Fig. 3, Figs. 9A and 9B (the so-called spade drill), and Figs. 4, 5A and 5B. In these figures, Figs. 2A to 2C show a two-flute throw-away tipped drill. In this drill, inserts 11a and 11b are fixed by screwing to outer and inner peripheral portions of a forward end of a shank 12 respectively. On the other hand, Fig. 3 shows a typical example of a one-flute throw-away tipped drill. In this drill, an insert 21 is fitted in a shank 22 as shown by an arrow, and fixed to a screw hole 24 by a screw 23. A coolant supply hole 25 directly supplies a coolant to the tip of the insert 21. Further, a chip breaker 26 is provided on the cutting edge of the insert 21, in order to part chips. Such a chip breaker 26 may not be provided, depending on the purpose. In the spade drill shown in Figs. 9A and 9B, an insert 41 is joined to a shank 42 with a screw 43.

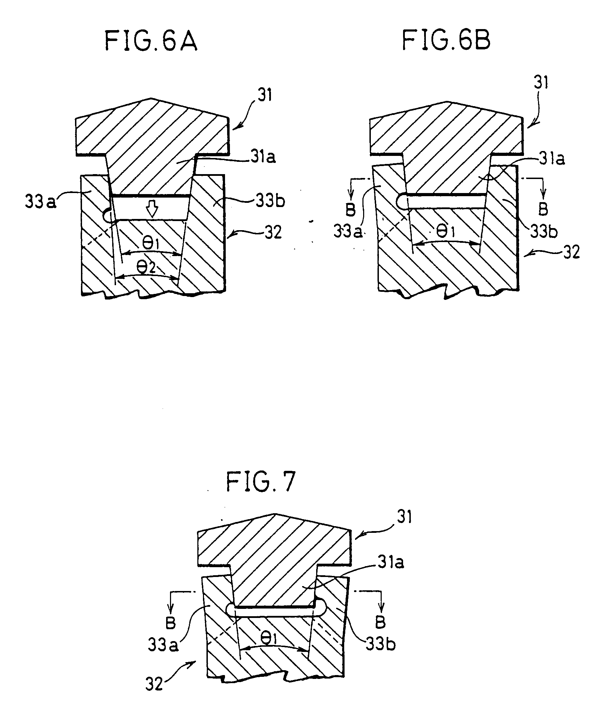

In a drill shown in Figs. 4, 5A and 5B, an insert 31 is fitted in a shank 32 along an arrow as shown in Fig. 4, so that the insert 31 and the shank 32 are connected with each other with no screw or the like, in the so-called self-grip system. In the state shown in Figs. 5A and 5B, the insert 31 and the shank 32 are connected with each other by this connection system. In such a connection state, side portions of a held portion 31a of the insert 31 are brought into contact with inner end surfaces of holding portions 33a and 33b of the shank 32 to cause frictional force, whereby the insert 31 is fixed to the shank 32. With reference to Figs. 6A and 6B, the state of such connection of the insert 31 and the shank 32 caused by engagement therebetween is explained as follows: Before the insert 31 is engaged with the shank 32, an angle $\theta_1$ formed by the left and right side portions of the held portion 31a is slightly greater than an angle $\theta_2$ formed by the opposite inner end surfaces of the holding portions 33a and 33b. When the insert 31 is press-fitted in the shank 32, the angle $\theta_2$ is gradually expanded by wedge action due to tapering of the left and right side portions of the held portion 31a and a slit 34 provided on the holding portion 33a. When $\theta_1 > \theta_2$, the held portion 31a is in contact with the holding portion 33b only at an upper end of the inner end surface of the holding portion 33a. When $\theta_2$ reaches $\theta_1$, the contact areas between both side portions of the held portion 31a and the inner end surface of the holding portion 33a are maximized as shown in Fig. 6B. The press fitting operation is stopped in this state, and the holding portion 33a is elastically deformed to cause pressing force in the contact surfaces of the same and the held portion 31a, so that the insert 31 is connected with/fixed to the shank 32 by frictional force between the contact surfaces.

A coolant supply hole 35 directly supplies a coolant to the cutting edge of the insert 31. Further, a chip breaker 36 is provided on the cutting edge of the insert 31, in order to part chips. Such a chip breaker 36 may not be provided, depending on the purpose.

Fig. 7 shows another example of a shank 32, which is provided with slits 33 not only in a holding portion 33a but in another holding portion 33b. In this case, an insert 31 is press-fitted in the shank 32 so that both holding portions 33a and 33b are simultaneously expanded, thereby holding a held portion 31a by elastic force thereof.

Characteristics required for a drill are roughly classified into wear resistance and deposition resistance for an insert, and breakage resistance, which is represented by toughness, of a shank. According to the present invention, at least the cutting edge of the insert is formed of a diamond-coated sintered body, whereby the insert is improved in wear resistance, deposition resistance and toughness. This is because diamond, forming a coating layer, is extremely hard and excellent in thermal conductivity as compared with WC and $Al_2O_3$, which are generally employed as main components for tool materials, and a sintered body, which is mainly composed of $Si_3N_4$ or SiC, forming a base material has high strength as well as high diamond evaporation strength since its thermal expansion coefficient is approximate to that of diamond, whereby no separation is caused.

It is preferable to prepare the shank from steel, which is excellent in toughness and breakage resistance, in order to reduce the material cost.

In the drill according to the present invention, the insert and the shank are disengageably mechanically connected with each other, whereby it is possible to easily disengage and throw away the insert, which is relatively damageable and short-lived. Further, the insert can be relatively simplified in configuration, whereby it is possible to employ a hardly worked material such as a silicon nitride based ceramic as a base material. In addition, the insert can be manufactured by injection molding.

The thickness of the diamond coating layer is preferably in a range of 0.1 $\mu$m to 200 $\mu$m, since no effect of improving wear resistance is attained if the thickness is smaller than 0.1 $\mu$m, while the degree of such improvement of wear resistance is no more increased if the thickness exceeds 200 $\mu$m. Thus, it is rather unadvantageous to provide a diamond coating layer having a thickness exceeding 200 $\mu$m.

These and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a structural diagram showing a conventional twist drill;

Fig. 2A is a front elevational view showing a two-flute screwed throw-away tipped drill among throw-away tipped drills to which the present invention is applied, Fig. 2B is a right side elevational view of the drill shown in Fig. 2A, and Fig. 2C is a perspective view showing an insert 11a in an enlarged manner;

Fig. 3 is an exploded perspective view showing a throw-away tipped drill of a one-flute screwed system, to which the present invention is applied;

Fig. 4 is an exploded perspective view showing a connection part of the so-called self-grip type drill among throw-away tipped drills to which the present invention is applied in an enlarged manner;

Fig. 5A is a front elevational view of the self-grip type throw-away tipped drill shown in Fig. 4, and Fig. 5B is a right side elevational view thereof;

**EP 0 454 114 B1**

Fig. 6A is a sectional view taken along the line A - A in Fig. 5A, for illustrating such a state that press fitting of an insert 31 in a shank 32 is started in the throw-away tipped drill shown in Fig. 4, and Fig. 6B is a similar sectional view for illustrating such a state that the insert 31 is connected with/fixed to the shank 32;

Fig. 7 is a sectional view illustrating another example of a connection part of the throw-away tipped drill shown in Fig. 4, which is provided with slits 34 on both sides of holding portions 33a and 33b;

Fig. 8 is a perspective view showing an exemplary insert of the inventive throw-away tipped drill, which is coated with a diamond film in a portion causing wear;

Fig. 9A is a top plan view showing a general structure of a spade drill defined under JIS, to which the present invention is applied; and

Fig. 9B is a left side elevational view of the spade drill shown in Fig. 9A.

## DESCRIPTION OF THE PREFERRED EMBODIMENTS

First Example of the present invention is now described. In this Example, $Si_3N_4$ powder materials were sufficiently mixed with sintering assistants listed in Table 1, formed under pressure of 1 ton/cm$^2$ and thereafter sintered in an $N_2$ gas atmosphere of 5 atm. at 1850°C for 2 hours, thereby preparing drills of $Si_{3N}4$ sintered bodies having inserts of 10.0 mm in outer diameter and 90.0 mm in length in accordance with JIS B4301.

Table 1

| Sample No. | Composition of Sintering Assistant (wt. %) |
|---|---|
| 1 | $2A\ell_2O_3 - 4Y_2O_3$ |
| 2 | $2A\ell_2O_3 - 2A\ell N - 2Y_2O_3 - 1\ ZrO_2$ |
| 3 | $4MgO - 3Y_2O_3$ |
| 4 | $3A\ell_2O_3 - 3Y_2O_3 - 2B_4C$ |
| 5 | $3A\ell_2O_3 - 3Y_2O_3$ |

As to the sample No. 5, the as-formed drill was heat treated at 1700°C in an $N_2$ gas atmosphere of 5 atm. for one hour, and it was confirmed that the drill was provided on its surface with a large number of freely grown silicon nitride columnar crystals of 1 to 1.5 $\mu$m in breadth and 3 to 5 $\mu$m in length.

Diamond coating layers of 1.0 to 50 $\mu$m in thickness were formed on the surfaces of the $Si_3N_4$ sintered body drills as shown in Table 2, with a well-known low-pressure vapor phase synthesizing method (heat filament method) under the following conditions:

    Reaction Vessel: silica tube of 200 mm in diameter
    Filament Material: metal tungsten
    Filament Temperature: 2400°C
    Filament-to-Drill Edge Distance: 10.0 mm
    Total Pressure: 100 Torr
    Atmosphere Gas: $H_2$ - 1 % $CH_4$ gas
    Time: 0.5 to 10 hours

The as-formed drills of diamond-coated $Si_{3N}4$ sintered bodies (samples Nos. 1 to 5) were subjected to drilling tests for Al-Si alloys under the following conditions:

    Workpiece: A 390
    Cutting Speed: 90 m/min.
    Feed Rate: 0.23 mm/rev.
    Depth of Cut: 62.0 mm
    Cutting Oil: not used

In the drilling tests, the drills were subjected to cutting until the same were broken or worn, to measure numbers of worked holes. After termination of such working, the edges of the drills were observed, and deposited states of the workpieces were investigated.

7

Comparative samples were formed by a WC-based cemented carbide drill (sample No. 6) having the same dimensions and configuration as the aforementioned inventive drills with a composition corresponding to JIS K10, and a surface-coated WC-based cemented carbide drill (sample No. 7) provided with a TiN coating layer of 2.0 $\mu$m in thickness formed by a well-known vacuum arc evaporation method, and these comparative samples were subjected to similar drilling tests.

Table 2 shows the results.

Table 2

| Sample No. | Thickness of Coating Layer ($\mu$m) | Number of Worked Holes | State of Cutting Edge | Deposition of Workpiece |
|---|---|---|---|---|
| 1 | 3.5 | 1184 | Normal | No |
| 2 | 4.8 | 1276 | Slightly Chipped | No |
| 3 | 1.0 | 1592 | Normaly Worn | No |
| 4 | 50.0 | 2020 | Slightly Chipped | No |
| 5 | 6.0 | 3240 | Normally Worn | No |
| 6* | - | 205 | Significantly Worn and Chipped | Yes |
| 7* | 3.5 | 321 | Significantly Worn, Separated and Chipped | Yes |

(Note)  *:Comparative Sample

Second Example of the present invention is now described. $Si_3N_4$ powder materials and sintering assistants shown in Table 3 were sufficiently mixed with each other. The mixed powder materials were formed under pressure of 1 ton/cm$^2$ and thereafter sintered in an $N_2$ gas atmosphere of 5 atm. at 1800°C for one hour, to prepare $Si_3N_4$ sintered bodies having drill configurations under JIS B4301, with inserts of 0.8 mm in outer diameter and 30.0 mm in length. Table 3 also shows breadths of columnar crystals of the $Si_3N_4$ sintered bodies.

Table 3

| Sample No. | Si$_3$N$_4$ Powder | Composition of Sintering Assistant (wt. %) | Structure (Breadth of Columnar Crystal: μm) |
|---|---|---|---|
| 8 | Ordinary Powder | 2Al$_2$O$_3$ - 4Y$_2$O$_3$ | 0.9 |
| 9 | Imide Decomposition Powder | 2Al$_2$O$_3$ - 2AlN - 2Y$_2$O$_3$ | 0.8 |
| 10 | Ordinary Powder | 4MgO - 2TiN - 2TiC | 0.9 |
| 11 | Ordinary Powder | 3MgO - 2B$_4$O - 2TiB$_2$ | 0.9 |
| 12 | Ordinary Powder | 3Al$_2$O$_3$ - 2AlN - 1HfO$_3$ | 0.8 |
| 13 | Ordinary Powder | 2Al$_2$O$_3$ - 2ZrO$_2$ - 1TiN | 0.8 |
| 14 | Imide Decomposition Powder | 2Al$_2$O$_3$ - 4Y$_2$O$_3$ | 0.6 |
| 15 | Imide Decomposition Powder | 2Al$_2$O$_3$ - 2AlN - 2Y$_2$O$_3$ | 0.6 |
| 16 | Imide Decomposition Powder | 4MgO - 2TiN - 2TiC | 0.5 |
| 17 | Ordinary Powder | 2Al$_2$O$_3$ - 4Y$_2$O$_3$ | 0.9 |
| 18 | Imide Decomposition Powder | 2Al$_2$O$_3$ - 4Y$_2$O$_3$ | 0.7 |

As to the samples Nos. 17 and 18, the drills were heat treated at 1700°C in an N$_2$ gas atmosphere of 5 atm. for 0.5 hours, and it was confirmed that the drills were provided on surfaces thereof with large numbers of freely grown columnar crystals of silicon nitride having breadths of 0.5 to 1.0 μm and lengths of 1.5 to 3 μm.

In these Si$_3$N$_4$ sintered bodies, the samples Nos. 10 to 18 were coated with diamond coating layers having thicknesses shown in Table 4 by a well-known low-pressure vapor phase synthesizing method (heat filament method) under the following conditions:

Reaction Vessel: silica tube of 200 mm in diameter

Filament Material: metal tungsten

Filament Temperature: 2400°C

Filament-to-Drill Edge Distance: 10.0 mm

Total Pressure: 100 Torr

Atmosphere Gas: H$_2$ - 1 % CH$_4$ gas

Time: 0.5 to 10 hours

The as-formed microdrills of the inventive diamond-coated Si$_3$N$_4$ sintered bodies (samples Nos. 10 to 18) were subjected to drilling tests for printed circuit boards under the following conditions:

Workpiece: printed circuit board of 6.5 mm in total thickness comprising three four-layer sheets held between Al plate of 0.12 mm in thickness and bakelite plate of 1.6 mm in thickness

Speed of Rotation: 60,000 r.p.m.

Cutting Speed: 4,000 mm/min.

Feed Rate: 50 μm/rev.

9

Numbers of holes worked before hole inner diameter surface roughness levels reached 30 μm, forming the basis for decision of ends of tool lives, were measured in these drilling tests. After termination of such working, edges of the microdrills were observed, and deposited states of the workpieces were investigated.

Comparative samples were formed by a WC-based cemented carbide microdrill (sample No. 19) having the same dimensions and configuration as the aforementioned microdrills with a composition corresponding to JIS K10 and a surface-coated WC-based cemented carbide microdrill (sample No. 20) Provided with a TiN coating layer of 2.0 μm in thickness formed by a well-known vacuum arc evaporation method, and these comparative samples were subjected to similar drilling tests for printed circuit boards.

Table 4 shows the results.

Table 4

| Sample No. | Thickness of Coating Layer (μm) | Deposition of Workpiece | State of Cutting Edge | Number of Worked Holes |
|---|---|---|---|---|
| 8* | - | slight | Slightly Chipped | 42600 |
| 9* | - | slight | Normally Worn | 52800 |
| 10 | 2.3 | No | Slightly Chipped | 76400 |
| 11 | 1.5 | No | Slightly Chipped | 80050 |
| 12 | 4.5 | No | Slightly Chipped | 84250 |
| 13 | 10.0 | No | Slightly Chipped | 90400 |
| 14 | 9.0 | No | Normally Worn | 98450 |
| 15 | 10.5 | No | Normally Worn | 97260 |
| 16 | 25.0 | No | Normally Worn | 100080 |
| 17 | 4.0 | No | Normally Worn | 131270 |
| 18 | 4.5 | No | Normally Worn | 154140 |
| 19* | - | Yes | Chipped | 6100 |
| 20* | TiN 3.5 | Yes | Separated, Worn and Chipped | 6520 |

(Note) *: Comparative and Conventional Samples

From the results shown in Table 4, it is understood that the comparative microdrills of $Si_3N_4$ sintered bodies having no diamond coating layers (samples Nos. 8 and 9) were also improved in toughness, and that the inventive microdrills of diamond-coated $Si_3N_4$ sintered bodies provided with diamond coating layers (samples Nos. 10 to 18) were extremely superior in wear resistance and deposition resistance to the conventional microdrills (samples Nos. 19 and 20).

Example 3 of the present invention is now described. A throw-away tipped drill of each inventive sample was prepared with an insert and a shank which were disengageably mechanically connected with each other in the method shown in Fig. 4. The insert was formed by a base material of a silicon nitride based sintered body or a silicon carbide based sintered body, while the shank was made of steel. Table 5 shows compositions of the samples in concrete terms. In each sample, a diamond coating layer was formed on a portion of the insert along oblique lines shown in Fig. 8. It is necessary to form such a diamond coating layer at least on one or both of a rake face and a flank, depending on workpieces and working conditions. In the surface of the base material for the insert, the portion to be provided with a diamond coating layer was subjected to scarification by ultrasonic vibration for 5 minutes with diamond abrasive grains of 8 to 16 μm, as a general method of improving initial nuclear growth density in diamond coating. Table 5 also shows thicknesses of diamond coating layers formed on the inserts of inventive drills Nos. 1 to 6, which were prepared by a well-known heat filament CVD method under the following conditions. As to the inventive drill No. 5, the diamond-coated surface was subjected to lapping for 5 hours with diamond paste of 0 to 3μm, to attain improvement in surface roughness of the insert.

Diamond Coating Layer Forming Conditions

 Reaction Vessel: silica tube of 200 mm in diameter
 Filament Material: metal tungsten
 Filament Temperature: 2400°C
 Filament-to-Insert Distance: 8 mm
 Total Pressure: 60 Torr
 Atmosphere Gas: mixed gas of $H_2$ and 1 % $CH_4$
 Coating Time: 2 to 100 hours

Comparative drills were prepared with an insert of silicon nitride based ceramic provided with no diamond coating layer and that of JIS P30 cemented carbide provided with a TiN coating layer of 3.0 μm in thickness. Further, additional comparative drills were prepared from the so-called twist drills (see Fig. 1) of JIS P30 cemented carbide and silicon nitride based ceramic provided with diamond coating layers. Table 5 shows compositions of the base materials for the inserts, materials for the shanks and thicknesses of the diamond coating layers for the inserts.

Table 5

| Sample Tool | | Composition of Base material for Insert (wt.%) | Material for Shank | Thickness of Diamond Coating Layer |
|---|---|---|---|---|
| Inventive Drill | 1 | $Si_3N_4(95)$, $A_2O_3(3)$, $Y_2O_3$ (2) | SCM435 | 4 |
| | 2 | $Si_3N_4$ (95), $A_2O_3$ (3), $Y_2O_3$ (2) | SKS2 | 20 |
| | 3 | $Si_3N_4$ (95), $A_2O_3$ (2), $Y_2O_3$ (2) $ZrO_2$ (1) | SCM435 | 12 |
| | 4 | $Si_3N_4$ (94), MgO (2), $Y_2O_3$ (2) | SKH51 | 35 |
| | 5 | $Si_3N_4$ (95), $A_2O_3$ (2), $Y_2O_3$ (2) $B_4C$ (2) | SCM435 | 100 |
| | 6 | SiC (98.8), B (0.5), C (0.7) | SCM440 | 60 |
| | 7 | $Si_3N_4$ (94), $A_2O_3$ (3), $Y_2O_3$ (3) | SCM435 | 10 |
| | 8 | $Si_3N_4$ (94), $A_2O_3$ (3), $Y_2O_3$ (3) | SCM435 | 20 |
| Comparative Drill | 1 | $Si_3N_4$ (95), $A_2O_3$ (3), $Y_2O_3$ (2) | SCM435 | - |
| | 2 | P30-Grade Cemented Carbide Coated with TiN | SCM435 | - |
| | 3 | P30-Grade Cemented Carbide Drill (Fig. 1) | - | 8 |
| | 4 | $Si_3N_4$ (94), MgO (4), $Y_2O_3$ (2) (Fig. 1) | - | 22 |

The inventive drills Nos. 7 and 8 were heat treated at 1710°C in an $N_2$ gas atmosphere of 5 atm. for one hour, and it was confirmed that the surfaces of the drills were provided with large numbers of freely grown columnar crystals of silicon nitride having breadths of 1.0 to 2.0 μm and lengths of 4.0 to 10.0 μm.

Cutting performance tests were made on drills of 8 mm in diameter under the following conditions:
Workpiece: A 390 (93 wt.% of Al and 17 wt.% of Si)
Cutting Speed: 100 mm/min. (water soluble cutting oil)
Feed Rate: 0.3 mm/rev.
Depth of Cut: 45 mm
Criterion: Cutting Edge state etc. were observed after working up to end of life.
Life: Generally regarded as ended when the outer peripheral flank was worn by 0.2 mm.

Table 6 shows the results of performance evaluation tests for the drills. It is understood from the results that the inventive drills were superior in wear resistance and toughness to the comparative drills. This is because the diamond coating layers of the inventive drills were excellent in adhesion strength and the shanks thereof were excellent in toughness.

Table 6

| Cutting Tool | | Number of Worked Holes | State of Cutting Edge |
|---|---|---|---|
| Invenntive Drill | 1 | 1220 | Normally Worn |
| | 2 | 1345 | Normally Worn |
| | 3 | 1180 | Normally Worn |
| | 4 | 1420 | Normally Worn |
| | 5 | 1623 | Normally Worn |
| | 6 | 1250 | Normally Worn |
| | 7 | 2280 | Normally Worn |
| | 8 | 2810 | Slightly Worn |
| Comparative Drill | 1 | 315 | Workpiece Significantly Adhered |
| | 2 | 260 | Workpiece Significantly Adhered |
| | 3 | 270 | Diamond Coating Layer Significantly Separated |
| | 4 | Initially Broken | |

Fourth Example of the present invention is now described. Samples having the same inserts, shanks and diamond coating layers as the inventive drill No. 1 in Example 3 were employed and subjected to cutting tests in relation to the following four methods of connecting the inserts and the shanks:
Inventive Drill A: self-grip type shown in Fig. 4
Inventive Drill B: two-flute screwed drill shown in Figs. 2A to 2C
Inventive Drill C: one-flute screwed drill shown in Fig. 3
Inventive Drill D: one-flute screwed drill shown in Figs. 9A and 9B (JIS spade drill)
A comparative drill having a brazed cemented carbide insert, which was out of the scope of the present invention, was also subjected to a cutting test under similar conditions to those for the four types of drills, for comparison of cutting characteristics. The cutting conditions were as follows:
Workpiece: AC4C
Cutting Speed: 50 m/min. and 150 m/min. (water soluble cutting oil)
Feed Rate: 0.1 mm/rev.
Depth of Cut: 40 mm
Diameter of Worked Hole: 20 mm
Table 7 shows the results of performance evaluation in this Example. Cutting characteristics, represented by stability, can be regarded excellent as horizontal components, thrusts and torque values of cutting balance acting on the drills by cutting resistance shown in Table 7 are reduced and values of speed dependency are reduced. It is understood from the results shown in Table 7 that the inventive drills A to D are superior in characteristics to the comparative drill E, and the inventive drills A and B have particularly excellent characteristics.

Table 7

| Sample | | Compared Characteristics | Cutting Balance (Horizontal Component) (N) | | Thrust (N) | | Torque (J) | Hole Diameter Over Size (μm) | Remarks |
|---|---|---|---|---|---|---|---|---|---|
| | | Cutting Speed V (m/min.) | 50 | 150 | 50 | 150 | 50 | 150 | |
| Inventive Drill | A | Self-Grip Type | 80 | 70 | 1000 | 1000 | 1400 | 25 | Throw-Away type Shown in Fig. 4. |
| | B | Two-Flute Screwed Type | 120 | 110 | 1100 | 1100 | 1750 | 30 | Throw-Away Type Shown in Fig. 2A to 2C. |
| | C | One-Flute Screwed Type | 190 | 160 | 2200 | 2100 | 1850 | 35 | Throw-Away Type Shown in Fig. 3. |
| | D | Spade type | 200 | 180 | 2400 | 2200 | 1900 | 50 | Throw-Away Type Shown in Fig. 3. |
| Comparative Drill | E | Brazed Type with Cutting Edge of Cemented Carbide | 80 | Unmeasurable | 2000 | Unmeasurable | 2900 | 30 | Helical Flute, Cross Thinning, Resharpening Available 4 Times. Incapable of Parting Chips and Broken at V = 150 |

(Note) Materials for inserts and shanks of inventive samples A, B and C and thicknesses of diamond Coating Layers are identical to those of inventive drill 1 in Table 5.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A drill of a diamond-coated sintered body comprising a base material of a sintered body mainly composed of silicon nitride and/or silicon carbide and a diamond coating layer of at least 0.1 $\mu$ in thickness formed an at least portion, being worn upon working, of the surface of said base material, wherein
at least a part of the surface of said base material is case-sintered when said diamond coating layer is provided on the surface of said base material, so that at least said sintered portion is coated with diamond.

2. A drill of a diamond-coated sintered body comprising a base material of a sintered body mainly composed of silicon nitride and/or silicon carbide and a diamond coating layer of at least 0.1 $\mu$ in thickness-formed an at least portion, being worn upon working, of the surface of said base material,
wherein
freely grown columnar crystals of silicon nitride are present in at least a part of the interface between said base material and said diamond coating layer when said diamond coating layer is provided on the surface of said base material.

3. A drill in accordance with claim 1 or 2 wherein the base material comprises an $Si_3N_4$ sintered body being mainly composed of $Si_3N_4$ and containing 0.01 to 30 percent by weight each of at least on of MgO, $Y_2O_3$, $Al_2O_3$, AlN, $ZrO_2$, $HfO_2$, TiC, TiN, $B_4C$, BN and $TiB_2$ to be not more than 50 percent by weight in total.

4. A microdrill of a diamond-coated $Si_3N_4$ sintered body comprising a base material of an $Si_3N_4$ sintered body being mainly composed of an $Si_3N_4$ columnar crystal structure of not more than 1 $\mu$m in breadth and containing 0.01 to 30 percent by weight each of at least one of MgO, $Y_2O_3$, $Al_2O_3$, AlN, $ZrO_2$, $HfO_3$, TiC TiN, $B_4C$, BN and $TiB_2$ to be not more than 50 percent by weight in total, and a diamond coating layer of at least 0.1 $\mu$m in thickness provided on the surface of said substrate,
wherein at least a part of the surface of said base material is case-sintered when said diamond coating layer is provided on the surface of said base material, so that at least said sintered portion is coated with diamond.

5. A microdrill of a diamond-coated $Si_3N_4$ sintered body comprising a base material of an $Si_3N_4$ sintered body being mainly composed of an $Si_3N_4$ columnar crystal structure of not more than 1 $\mu$m in breadth and containing 0.01 to 30 percent by weight each of at least one of MgO, $Y_2O_3$, $Al_2O_3$, AlN, $ZrO_2$, $HfO_3$, TiC, TiN, $B_4C$, BN and $TiB_2$ to be not more than 50 percent by weight in total, and a diamond coating layer of at least 0.1 $\mu$m in thickness provided on the surface of said substrate,
wherein freely grown columnar crystals of silicon nitride are present in at least a part of the interface between said base material and said diamond coating layer when said diamond coating layer is provided on the surface of said base material.

6. A microdrill of a diamond-coated sintered body in accordance with claim 4 or 5, wherein said $Si_3N_4$ sintered body is prepared from a raw material of imide decomposition method $Si_3N_4$ powder.

7. A throw-away tipped drill comprising an insert (21, 31) for cutting a workpiece and a shank (22, 32) to be mounted on a prescribed position of a cutting machine, said insert being desengageably mechanically connected with said shank, wherein
said insert is formed by a diamond-coated sintered body having a base material of a sintered body mainly composed of $Si_3N_4$ and/or SiC, at least a cutting edge of said insert being coated with diamond or diamond-structure carbon in the surface of said base material and wherein
at least a part of the surface of said base material is case-sintered when a diamond coating layer is provided on the surface of said base material, so that at least said sintered portion is coated with diamond.

8. A throw-away tipped drill comprising an insert (21, 31) for cutting a workpiece and a shank (22, 32) to be mounted on a prescribed position of a cutting machine, said insert being desengageably mechanically connected with said shank, wherein
said insert is formed by a diamond-coated sintered body having a base material of a sintered body mainly

composed of $Si_3N_4$ and/or SiC, at least a cutting edge of said insert being coated with diamond or diamond-structure carbon in the surface of said base material and wherein

freely grown columnar crystals of silicon nitride are present in at least a part of the interface between said base material and a diamond coating layer when said diamond coating layer is provided on the surface of said base material.

9. A throw-away tipped drill in accordance with claim 7 or 8, wherein said shank (22, 32) is formed of steel.

10. A throw-away tipped drill in accordance with claim 7 or 8, wherein said shank (22, 32) has holding portions (33a, 33b) to be enganged with a held portion (31a) of said insert (21, 31) for holding the same, so that said insert is fixed to said shank by elastic force following elastic deformation of said holding portions caused upon engangement with said insert.

11. A throw-away tipped drill in accordance with claim 7 or 8, wherein said insert (21, 31) is fixed to said shank (22, 32) by screwing.

12. A drill in accordance with any of the preceding claims, wherein said diamond coating layer is not more than 200 μm in thickness.

## Patentansprüche

1. Bohrer mit einem diamantbeschichteten Sinterkörper, der einen Grundwerkstoff aus einem Sinterkörper, der hauptsächlich aus Siliziumnitrid und/oder Siliziumkarbid besteht, und einer Diamantüberzugsschicht von wenigstens 0,1 μm Dicke, die auf wenigstens einem Bereich, der bei der Bearbeitung verschlissen wird, der Oberfläche des Grundmaterials gebildet ist, wobei wenigstens ein Teil der Oberfläche des Grundmaterials einsatzgehärtet wird, wenn die Diamantüberzugsschicht auf der Oberfläche des Grundwerkstoffs aufgebracht wird, so daß wenigstens der gesinterte Bereich mit Diamant beschichtet ist.

2. Bohrer mit einem diamantbeschichteten Sinterkörper, der einen Grundwerkstoff aus einem Sinterkörper, der hauptsächlich aus Siliziumnitrid und/oder Siliziumkarbid besteht, und einer Diamantüberzugsschicht von wenigstens 0,1 μm Dicke, die auf wenigstens einem Bereich, der bei der Bearbeitung verschlissen wird, der Oberfläche des Grundmaterials gebildet ist, wobei frei gewachsene Siliziumnitridkristalle auf wenigstens einem Teil der Schnittfläche zwischen dem Grundmaterial und der Diamantüberzugsschicht vorhanden sind, wenn die Diamantüberzugsschicht auf der Oberfläche des Grundwerkstoffs vorgesehen wird.

3. Bohrer nach Anspruch 1 oder 2, wobei das Grundmaterial einen $Si_3N_4$-Sinterkörper umfaßt, der hauptsächlich aus $Si_3N_4$ zusammengesetzt ist und 0,01 bis 30 Gew.-% jedes von wenigstens MgO, $Y_2O_3$, $Al_2O_3$, AlN, $ZrO_2$, $HfO_2$, TiC, TiN, $B_4C$, BN und $TiB_2$, jedoch nicht mehr als 50 Gew.-% insgesamt, enthält.

4. Mikrobohrer mit einem diamantbeschichteten $Si_3N_4$-Sinterkörper, der einen Grundwerkstoff eines $Si_3N_4$-Sinterkörpers, der hauptsächlich aus einer säulenförmigen $Si_3N_4$-Kristallstruktur von nicht mehr als 1 μm Breite besteht und wenigstens 0,01 bis 30 Gew.-% jedes von wenigstens einem von MgO, $Y_2O_3$, $Al_2O_3$, AlN, $ZrO_2$, $HfO_3$, TiC, TiN, $B_4C$, Bn und $TiB_2$, jedoch nicht mehr aus insgesamt 50 Gew.-%, enthält, und eine auf der Oberfläche des Substrats vorgesehene Diamantüberzugsschicht von wenigstens 0,1 μm Dicke umfaßt, wobei wenigstens ein Teil der Oberfläche des Grundwerkstoffs einsatzgehärtet wird, wenn die Diamantüberzugsschicht auf der Oberfläche des Grundwerkstoffs vorgesehen wird, so daß wenigstens der gesinterte Bereich mit Diamant beschichtet ist.

5. Mikrobohrer mit einem diamantbeschichteten $Si_3N_4$-Sinterkörper, der einen Grundwerkstoff eines $Si_3N_4$-Sinterkörpers, der hauptsächlich aus einer säulenförmigen $Si_3N_4$-Kristallstruktur von nicht mehr als 1 μm Breite besteht und wenigstens 0,01 bis 30 Gew.-% jedes von wenigstens einem von MgO, $Y_2O_3$, $Al_2O_3$, AlN, $ZrO_2$, $HfO_3$, TiC, TiN, $B_4C$, BN und $TiB_2$, jedoch nicht mehr aus insgesamt 50 Gew.-%, enthält, und eine auf der Oberfläche des Substrats vorgesehene Diamantüberzugsschicht von wenigstens 0,1 μm Dicke umfaßt, wobei frei gewachsene säulenförmige Siliziumnitridkristalle auf wenigstens einem Teil der Schnittfläche zwischen dem Grundwerkstoff und der Diamantüberzugsschicht vorhanden sind, wenn die Diamantüberzugsschicht auf der Oberfläche des Grundwerkstoffs vorgesehen wird.

**6.** Mikrobohrer mit einem diamantbeschichteten Sinterkörper nach Anspruch 4 oder 5, wobei der $Si_3N_4$-Sinterkörper aus einem Rohstoff eines $Si_3N_4$-Pulvers aus einem Imid-Zersetzungsverfahren hergestellt wird.

**7.** Bohrer mit Wegwerfspitze, der wenigstens einen Einsatz (21, 31) zum Schneiden eines Werkstücks und einen Schaft (22, 32), der in einer vorgegebenen Stellung einer Schneidmaschine angebracht wird, besteht, wobei der Einsatz mechnisch lösbar mit dem Schaft verbunden ist, wobei
der Einsatz durch einen diamantbeschichteten Sinterkörper mit einem Grundwerkstoff eines Sinterkörpers, der hautpsächlich aus $Si_3N_4$ und/oder SiC zusammengesetzt ist, besteht, wobei wenigstens eine Schneidkante des Einsatzes auf der Oberfläche des Grundwerkstoffs mit Diamant oder diamantstrukturiertem Kohlenstoff beschichtet ist, und wobei
wenistens ein Teil der Oberfläche des Grundwerkstoffs einsatzgehärtet wird, wenn eine Diamantüberzugsschicht auf der Oberfläche des Grundwerkstoffs vorgesehen wird, so daß wenigstens der gesinterte Bereich mit Diamant beschichtet ist.

**8.** Bohrer mit Wegwerfspitze, der wenigstens einen Einsatz (21, 31) zum Schneiden eines Werkstücks und einen Schaft (22, 32), der in einer vorgegebenen Stellung einer Schneidmaschine angebracht wird, besteht, wobei der Einsatz mechnisch lösbar mit dem Schaft verbunden ist, wobei
der Einsatz durch einen diamantbeschichteten Sinterkörper mit einem Grundwerkstoff eines Sinterkörpers, der hautpsächlich aus $Si_3N_4$ und/oder SiC zusammengesetzt ist, besteht, wobei wenigstens eine Schneidkante des Einsatzes auf der Oberfläche des Grundwerkstoffs mit Diamant oder diamantstrukturiertem Kohlenstoff beschichtet ist, und wobei
frei gewachsene säulenförmige Siliziumnitridkristalle auf wenigstens einem Teil der Schnittfläche zwischen dem Grundwerkstoff und einer Diamantüberzugsschicht vorhanden sind, wenn die Diamantüberzugsschicht auf der Oberfläche des Grundmaterials vorgesehen wird.

**9.** Bohrer mit Wegwerfspitze nach Anspruch 7 oder 8, wobei der Schaft (22, 32) aus Stahl hergestellt ist.

**10.** Bohrer mit Wegwerfspitze nach Anspruch 7 oder 8, wobei der Schaft (22, 32) Haltebereiche (33a, 33b) aufweist, die mit einem gehaltenen Bereich (31a) des Einsatzes (21, 31) zusammenwirken, um denselben zu halten, so daß der Einsatz durch elastische Kraft nach einer elastische Verformung der Haltebereiche, die beim Zusammensetzen mit dem Einsatz bewirkt wird, fixiert ist.

**11.** Bohrer mit Wegwerfspitze nach Anspruch 7 oder 8, wobei der Einsatz (21, 31) durch Verschrauben an dem Schaft (22, 32) befestigt ist.

**12.** Bohrer nach einem der vorhergehenden Ansprüche, wobei die Diamantüberzugsschicht nicht mehr als 200 μm dick ist.

## Revendications

**1.** Foret à corps fritté revêtu de diamant, comprenant un matériau de base en un corps fritté principalement composé de nitrure de silicium et/ou de carbure de silicium, et une couche de revêtement en diamant présentant une épaisseur d'au moins 0,1 μm et formée sur au moins une région, dépouillée au stade de l'usinage, de la surface dudit matériau de base, dans lequel
au moins une partie de la surface dudit matériau de base est comme frittée lorsque ladite couche de revêtement en diamant est ménagée sur la surface dudit matériau de base, de telle sorte qu'au moins ladite région frittée soit revêtue de diamant.

**2.** Foret à corps fritté revêtu de diamant, comprenant un matériau de base en un corps fritté principalement composé de nitrure de silicium et/ou de carbure de silicium, et une couche de revêtement en diamant présentant une épaisseur d'au moins 0,1 μm et formée sur au moins une région, dépouillée au stade de l'usinage, de la surface dudit matériau de base, dans lequel
des cristaux en colonne de nitrure de silicium, à croissance libre, sont présents dans au moins une partie de l'interface entre ledit matériau de base et ladite couche de revêtement en diamant lorsque ladite couche de revêtement en diamant est ménagée sur la surface dudit matériau de base.

**3.** Foret selon la revendication 1 ou 2, dans lequel le matériau de base comprend un corps fritté en $Si_3N_4$ composé principalement de $Si_3N_4$ et renfermant de 0,01 à 30 pour cent en poids de chacun d'au moins l'un des éléments MgO, $Y_2O_3$, $Al_2O_3$, AlN, $ZrO_2$, $HfO_2$, TiC, TiN, $B_4C$, BN et $TiB_2$ n'excédant pas, au total, 50 pour cent en poids.

4. Microforet à corps fritté en $Si_3N_4$ revêtu de diamant, comprenant un matériau de base en un corps fritté en $Si_3N_4$ composé principalement d'une structure cristalline $Si_3N_4$ en colonne, d'une largeur n'excédant pas 1 µm et renfermant de 0,01 à 30 pour cent en poids de chacun d'au moins l'un des éléments MgO, $Y_2O_3$, $Al_2O_3$, AlN, $ZrO_2$, $HfO_3$, TiC, TiN, $B_4C$, BN et $TiB_2$ n'excédant pas, au total, 50 pour cent en poids, et une couche de revêtement en diamant présentant une épaisseur d'au moins 0,1 µm et ménagée sur la surface dudit substrat,

   dans lequel au moins une partie de la surface dudit matériau de base est comme frittée lorsque ladite couche de revêtement en diamant est ménagée sur la surface dudit matériau de base, de telle sorte qu'au moins ladite région frittée soit revêtue de diamant.

5. Microforet à corps fritté en $Si_3N_4$ revêtu de diamant, comprenant un matériau de base en un corps fritté en $Si_3N_4$ composé principalement d'une structure cristalline $Si_3N_4$ en colonne, d'une largeur n'excédant pas 1 µm et renfermant de 0,01 à 30 pour cent en poids de chacun d'au moins l'un des éléments MgO, $Y_2O_3$, $Al_2O_3$, AlN, $ZrO_2$, $HfO_3$, TiC, TiN, $B_4C$, BN et $TiB_2$ n'excédant pas, au total, 50 pour cent en poids, et une couche de revêtement en diamant présentant une épaisseur d'au moins 0,1 µm et ménagée sur la surface dudit substrat,

   dans lequel des cristaux en colonne de nitrure de silicium, à croissance libre, sont présents dans au moins une partie de l'interface entre ledit matériau de base et ladite couche de revêtement en diamant lorsque ladite couche de revêtement en diamant est ménagée sur la surface dudit matériau de base.

6. Microforet à corps fritté revêtu de diamant, selon la revendication 4 ou 5, dans lequel ledit corps fritté en $Si_3N_4$ est élaboré à partir d'un matériau brut à base de poudre de $Si_3N_4$ obtenue par un procédé de décomposition imide.

7. Foret à pointe jetable comprenant une pièce insérable (21, 31) pour couper une pièce à usiner, et un fût (22, 32) devant être monté en un emplacement préétabli d'une machine de découpage, ladite pièce insérable étant reliée mécaniquement audit fût, de manière libérable, dans lequel ladite pièce insérable est formée d'un corps fritté revêtu de diamant et présentant un matériau de base en un corps fritté principalement composé de $Si_3N_4$ et/ou de SiC, au moins une arête de coupe de ladite pièce insérable étant revêtue de diamant ou de carbone à structure diamant dans la surface dudit matériau de base, et dans lequel

   au moins une partie de la surface dudit matériau de base est comme frittée lorsqu'une couche de revêtement en diamant est ménagée sur la surface dudit matériau de base, de telle sorte qu'au moins ladite région frittée soit revêtue de diamant.

8. Foret à pointe jetable comprenant une pièce insérable (21, 31) pour couper une pièce à usiner, et un fût (22, 32) devant être monté en un emplacement préétabli d'une machine de découpage, ladite pièce insérable étant reliée mécaniquement audit fût, de manière libérable, dans lequel ladite pièce insérable est formée d'un corps fritté revêtu de diamant et présentant un matériau de base en un corps fritté principalement composé de $Si_3N_4$ et/ou de SiC, au moins une arête de coupe de ladite pièce insérable étant revêtue de diamant ou de carbone à structure diamant dans la surface dudit matériau de base, et dans lequel

   des cristaux en colonne de nitrure de silicium, à croissance libre, sont présents dans au moins une partie de l'interface entre ledit matériau de base et une couche de revêtement en diamant lorsque ladite couche de revêtement en diamant est ménagée sur la surface dudit matériau de base.

9. Foret à pointe jetable, selon la revendication 7 ou 8, dans lequel ledit fût (22, 32) est fabriqué en acier.

10. Foret à pointe jetable, selon la revendication 7 ou 8, dans lequel ledit fût (22, 32) présente des zones de retenue (33a, 33b) conçues pour être mises en prise avec une région retenue (31a) de ladite pièce insérable (21, 31), en vue de retenir cette dernière, de telle sorte que ladite pièce insérable soit fixée audit fût par une force élastique consécutive à une déformation élastique desdites zones de retenue, provoquée lors de la venue en prise avec ladite pièce inséparable.

11. Foret à pointe jetable, selon la revendication 7 ou 8, dans lequel ladite pièce insérable (21, 31) est assujettie audit fût (22, 32) par vissage.

12. Foret selon l'une quelconque des revendications précédentes, dans lequel ladite couche de revêtement en diamant présente une épaisseur n'excédant pas 200 µm.

FIG.1

FIG.2A

FIG.2B

FIG.2C

FIG.3

## FIG.4

## FIG.5A

## FIG.5B

## FIG.6A

## FIG.6B

## FIG.7

FIG.8

FIG.9A

FIG.9B